# EUROPÄISCHE PATENTANMELDUNG

(11) **EP 4 592 917 A1**
(43) Veröffentlichungstag der Anmeldung: **30.07.2025**
(21) Anmeldenummer: 25154168.6
(22) Anmeldetag: 27.01.2025
(51) Int. Cl.: G06Q 10/047, G06Q 10/08, G06Q 10/087, B60W 60/00, G05D 1/69

(54) **LOGISTIKZENTRUM MIT STATIONÄRER FÖRDERTECHNIK UND AUTONOMEN TRANSPORTFAHRZEUGEN**

(30) Priorität: 25.01.2024 DE 102024102193
(71) Anmelder: IGZ Ingenieurgesellschaft für logistische Informationssysteme mbH, 95685 Falkenberg (DE)
(72) Erfinder: Zrenner, Dipl-Ing., Johann, 95685 Falkenberg (DE)
(74) Vertreter: Strehl & Partner mbB

(57) **Zusammenfassung**

Die Erfindung betrifft ein Logistikzentrum mit stationärer Fördertechnik (10) mit mehreren Übergabepunkten (10a, 10b, 10c) und einer Flotte von autonomen Transportfahrzeugen (AGVs) (12a, 12b, 12c) zum Transportieren von Waren von oder zu den Übergabepunkten (10a, 10b, 10c) der Fördertechnik (10) und einer Steuerung (16) zum Steuern der Fördertechnik (10) und der autonomen Transportfahrzeugen, wobei die Steuerung (16) dazu ausgelegt ist in einem Optimierungsprozess einen optimierten Auftrags- und Transportplan zu erstellen, gemäß dem optimierten Auftrags- und Transportplan Aufträge an die AGVs (12a, 12b, 12c) zu vergeben und Instruktionen für Fahrwege an die AGVs (12a, 12b, 12c) zu senden, Statusmeldungen der AGVs zu empfangen und zu verarbeiten und bei außerplanmäßigen Statusmeldungen eines oder mehrerer AGVs (12a, 12b, 12c) den Optimierungsprozess auszuführen und den optimierten Auftrags- und Transportplan zu verändern oder neu zu erstellen.

Es wird vorgeschlagen, dass die Steuerung (16) in ein Extended Warehouse Management (EWM)-System integriert ist und auf Daten aus dem Extended Warehouse Management (EWM)-System zugreift und eine selbstlernende KI umfasst, die außerplanmäßige Statusmeldungen bei zukünftigen Optimierungsprozessen berücksichtigt.

## Beschreibung

Die Erfindung betrifft Logistikzentrum mit stationärer Fördertechnik und autonomen Transportfahrzeugen nach dem Oberbegriff des Anspruchs 1.

Aus der WO2022229677A1 sind ein System und ein Verfahren zur Zuweisung eines Fahrerlosen Transportsystems (FTS, auch AGV für "Autonomous Guided Vehicle") an einem Anlagenstandort einer Anlage bekannt. Der Auftragsgenerator kann mit einer vorausschauenden logischen Regel konfiguriert werden, deren Bedingungsanweisung einen Satz vorausschauender Anlagenstatusbedingungen umfasst, deren Erfüllung dazu führt, dass der Auftragsgenerator einen entsprechenden AGV-Dummy-Transportauftrag an den Flottenmanager sendet. Der AGV-Dummy-Transportauftrag fordert eine Zuteilung eines AGV in einem ausgelasteten Zustand an einem Werksstandort an, bis eine Reihe entsprechender erwarteter Bedingungen erfüllt sind oder bis ein vordefinierter Timer abläuft.

Die Vergabe der AGV-Transportaufträge erfolgt in einem Optimierungsprozess aufgrund einer Simulation, die Übergabepunkte und Übergabezeiten als statische Randbedingungen berücksichtigt, aber nicht in die Optimierung einbezieht.

Daraus können sich Effizienzverluste ergeben, z.B. wenn aufgrund eines Defekts oder außerplanmäßigen Verhaltens eine Übergabe an dem geplanten Übergabepunkt nicht möglich ist, so dass sich dort ein Stau bildet, der aber durch ein Ausweichen auf andere Übergabepunkte einfach umgangen werden könnte.

Der Erfindung liegt die Aufgabe zugrunde, die Effizienz eines gattungsgemäßen Logistikzentrums zu steigern.

Die Aufgabe wird gelöst durch ein Logistikzentrum mit den Merkmalen des Anspruchs 1 und durch ein Verfahren mit den Merkmalen des Anspruchs 10. Vorteilhafte Ausgestaltungen der Erfindung ergeben sich aus den Unteransprüchen.

Die Erfindung betrifft ein Logistikzentrum mit stationärer Fördertechnik mit mehreren Übergabepunkten und einer Flotte von autonomen Transportfahrzeugen (AGVs) zum Transportieren von Waren von- oder zu den Übergabepunkten der Fördertechnik und einer Steuerung zum Steuern der Fördertechnik und der autonomen Transportfahrzeugen, wobei die Steuerung dazu ausgelegt ist in einem Optimierungsprozess einen optimierten Auftrags- und Transportplan zu erstellen, gemäß dem optimierten Auftrags- und Transportplan Aufträge an die AGVs zu vergeben und Instruktionen für Fahrwege an die AGVs zu senden, Statusmeldungen der AGVs zu empfangen und zu verarbeiten und bei außerplanmäßigen Statusmeldungen eines oder mehrerer AGVs den Optimierungsprozess auszuführen und den optimierten Auftrags- und Transportplan zu verändern oder neu zu erstellen.

Vorzugsweise ist die Steuerung dazu ausgelegt, in dem Optimierungsprozess gemeinsam mit dem optimierten Auftrags- und Transportplan für die AGVs auch Transportwege und Übergabepunkte der stationären Fördertechnik zu optimieren und bei außerplanmäßigen Statusmeldungen eines oder mehrerer AGVs gegebenenfalls die Transportwege und/oder Übergabepunkte der stationären Fördertechnik zu verändern.

Als stationäre Fördertechnik werden in diesem Zusammenhang insbesondere Regalbediengeräte, Förderbänder oder Rollenbahnen und zugehörige Elemente wie Hubtische oder Querförderer sowie stationäre Picking-Roboter.

Hier und im Folgenden sind die Begriffe "Fahrweg", "Transportweg" und "Übergabepunkt" immer sowohl räumlich als auch zeitlich zu verstehen, also als Trajektorien bzw. Punkte in der Raumzeit.

Als außerplanmäßig wird eine Statusmeldung bezeichnet, wenn der Status um mehr als eine vorgegebene, Geräte- und Situationsabhängige Toleranz von dem gemäß dem optimierten Auftrags- und Transportplan erwarteten Soll-Status abweicht oder wenn die Statusmeldung eine Fehlermeldung enthält.

In einer Weiterbildung der Erfindung wird vorgeschlagen, dass die Flotte von autonomen Transportfahrzeugen verschiedene Typen von autonomen Transportfahrzeugen umfasst. Durch die zentralisierte Steuerung einer heterogenen Flotte können Konflikte zwischen heterogenen AGV vermieden werden.

Gemäß der Erfindung wird vorgeschlagen, dass Steuerung eine selbstlernende KI umfasst, die außerplanmäßige Statusmeldungen bei zukünftigen Optimierungsprozessen berücksichtigt.

Fener wird vorgeschlagen, dass die Steuerung dazu ausgelegt ist, Befehle für Gebäudetechnik auszugeben und bei außerplanmäßigen Statusmeldungen eines oder mehrerer AGVs einen oder mehrere Befehle für die Gebäudetechnik zu verändern. Dadurch kann die Gebäudetechnik auf Planänderungen reagieren und z.B. Türen oder Schnelllauftore können perfekt synchronisiert angesteuert werden.

In einer Weiterbildung der Erfindung wird vorgeschlagen, dass die Steuerung dazu ausgelegt ist, Statusmeldungen der Gebäudetechnik zu empfangen und bei außerplanmäßigen Statusmeldungen der Gebäudetechnik den Optimierungsprozess erneut auszuführen und den optimierten Auftrags- und Transportplan unter Berücksichtigung der Statusmeldungen der Gebäudetechnik zu verändern oder neu zu erstellen. Dadurch kann auf Statusmeldungen der Gebäudetechnik, z.B. ein nicht passierbares Tor, sofort reagiert werden und ein neuer Plan erstellt werden, der dies berücksichtigt.

In einer besonders vorteilhaften Ausgestaltung der Erfindung steuert die Steuerung neben den Fahrwegen wenigstens einen weiteren Freiheitsgrad wenigstens eines AGVs steuert. Der wenigstens eine Freiheitsgrad kann eine Höhenverstellung, ein Greifarm oder dergleichen sein. Insbesondere geht der Eingriff der Steuerung in die Teilautonome Steuerung des AGV über den in der Norm VDA 5050 spezifizierten Umfang hinaus. Insbesondere greift die Steuerung so weit wie möglich in die Steuerung des AGV ein, wobei die Sicherheitsfunktionen gemäß ISO 3691-4 weiterhin durch die autonome Steuerung des AGV übernommen werden.

Gemäß der Erfindung wird vorgeschlagen, dass die Steuerung zur Ausführung der Optimierungsprozesse auf Daten aus einem Extended Warehouse Management (EWM)-System zugreift. Durch den Zugriff auf die EWM-Daten kann eine weit vorausschauende, nahtlose Optimierung erfolgen. Dies gilt in besonderem Maße dann, wenn die Steuerung in ein Extended Warehouse Management (EWM)-System integriert ist.

Ein weiterer Aspekt der Erfindung betrifft ein Verfahren zum Steuern eines Logistikzentrums mit stationärer Fördertechnik mit mehreren Übergabepunkten und einer Flotte von autonomen Transportfahrzeugen (AGVs) zum Transportieren von Waren von oder zu den Übergabepunkten der Fördertechnik und einer Steuerung zum Steuern der Fördertechnik und der autonomen Transportfahrzeugen, wobei das Verfahren das Ausführen eines Optimierungsprozesses zur Erstellung eines optimierten Auftrags- und Transportplans, das Vergeben von Aufträgen an die AGVs gemäß dem optimierten Auftrags- und Transportplan, das Senden von und Instruktionen für Fahrwege an die AGVs, das Empfangen und Verarbeiten von Statusmeldungen der AGVs zu empfangen und das erneute Ausführen des Optimierungsprozesses bei außerplanmäßigen Statusmeldungen eines oder mehrerer AGVs zum Verändern oder neu Erstellen des optimierten Auftrags- und Transportplan umfasst.

Es wird vorgeschlagen, dass beim Ausführen des Optimierungsprozesses gemeinsam mit dem optimierten Auftrags- und Transportplan für die AGVs auch Transportwege und Übergabepunkte der stationären Fördertechnik optimiert werden und bei außerplanmäßigen Statusmeldungen eines oder mehrerer AGVs gegebenenfalls die Transportwege und/oder Übergabepunkte der stationären Fördertechnik verändert werden

Weitere Merkmale und Vorteile ergeben sich aus der folgenden Figurenbeschreibung. Die gesamte Beschreibung, die Ansprüche und die Figuren offenbaren Merkmale der Erfindung in speziellen Ausführungsbeispielen und Kombinationen. Der Fachmann wird die Merkmale auch einzeln betrachten und zu weiteren Kombinationen oder Unterkombinationen zusammenfassen, um die Erfindung, wie sie in den Ansprüchen definiert ist, an seine Bedürfnisse oder an spezielle Anwendungsbereiche anzupassen.

Dabei zeigen:
Fig. 1 schematisch ein Logistikzentrum nach einem ersten Ausführungsbeispiel der Erfindung;
Fig. 2 eine Stausituation in einem Logistikzentrum nach Figur 1;
Fig. 3 einen geänderten optimierten Auftrags- und Transportplan nach einer in einer Situation gemäß Fig. 2 erhaltenen Statusmeldung;
Fig. 4 ein schematisches Schaubild eines erfindungsgemäßen Logistikzentrums;
Fig. 5 ein schematisches Schaubild eines Bereichs des Logistikzentrums mit verschiedenen möglichen Fahrwegen für AGVs sowie verschiedenen Störeinflüssen; und
Fig. 6a-6c eine KI-generierte Auslastungsprognose eines exemplarischen Bereichs des Logistikzentrums für verschiedene Wochentage.

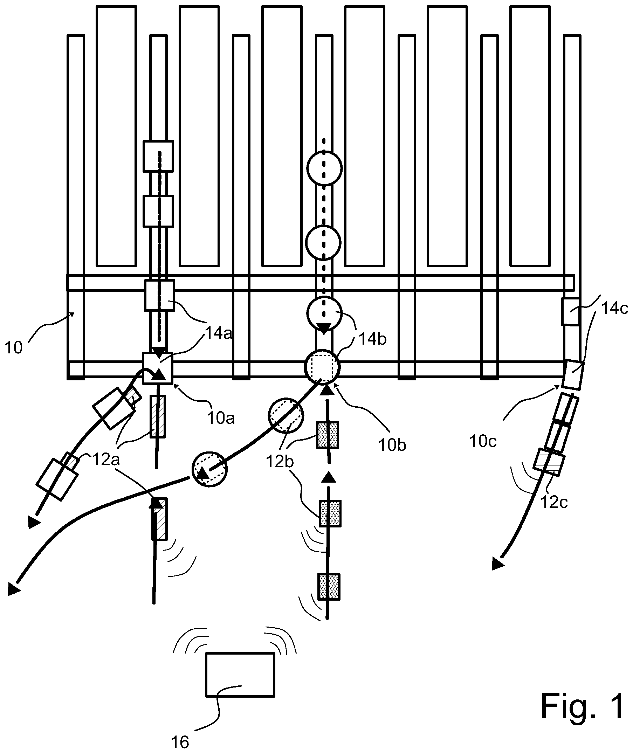

Figur 1 zeigt ein Logistikzentrum nach einem ersten Ausführungsbeispiel der Erfindung.

Das Logistikzentrum umfasst stationäre Fördertechnik 10 mit Regalbediengeräten (nicht dargestellt) und Fördertechnik-Bahnen 10 mit mehreren Übergabepunkten 10a, 10b, 10c sowie eine Flotte von autonomen Transportfahrzeugen (AGVs) 12a, 12b, 12c zum Transportieren von Waren 14a, 14b, 14c von- oder zu den Übergabepunkten 10a, 10b, 10c der Fördertechnik 10.

In dem in Fig. 1 dargestellten Ausführungsbeispiel umfasst die Flotte verschiedene Typen von autonomen Transportfahrzeugen 12a, 12b, 12c, z.B. autonome Hochhubwägen 12a, automatisierte Plattformfahrzeuge 12b und/oder einen Routenzug 12c, die durch unterschiedliche Schraffuren dargestellt sind.

Eine zentrale Steuerung 16 zum steuert die Fördertechnik 10 und die autonomen Transportfahrzeuge 12a, 12b, 12c sowie auch die Gebäudetechnik (Türen, Fenster, Beleuchtung, Lüftung, nicht dargestellt).

Die Steuerung 16 ist in ein Extended Warehouse Management (EWM)-System integriert und greift zur Ausführung der Optimierungsprozesse auf Daten aus einem Extended Warehouse Management (EWM)-System zu.

Die Steuerung 16 erstellt in einem Optimierungsprozess einen optimierten Auftrags- und Transportplan. Gemäß dem optimierten Auftrags- und Transportplan vergibt die Steuerung 16 über ein im Logistikzentrum installiertes Drahtlos-Kommunikationssystem (z.B. W-Lan) Aufträge an die AGVs 12a, 12b, 12c und sendet und Instruktionen für Fahrwege an die AGVs 12a, 12b, 12c. In den Aufträgen sind Informationen zu dem Übergabepunkten 10a, 10b, 10c am Anfang und am Ende der Fahrstrecke und zum Fahrweg bzw. der Trajektorie enthalten.

Ferner empfängt und verarbeitet die Steuerung 16 ständig Statusmeldungen der AGVs 12a, 12b, 12c und vergleicht diese Statusmeldungen, die nach dem optimierten Auftrags- und Transportplan zu erwarten waren. Wenn eine oder mehrere Statusmeldungen um mehr als eine Toleranz von den planmäßigen Statusmeldungen abweicht, werden dies Statusmeldungen als außerplanmäßige Statusmeldung klassifiziert. Wenn eine oder mehrere außerplanmäßige Statusmeldungen eines oder mehrerer AGVs 12a, 12b, 12c empfangen wurden, führt die Steuerung 16 den Optimierungsprozess erneut aus und verändert den optimierten Auftrags- und Transportplan zu verändern oder erstellt diesen neu.

Vorzugsweise ist die Steuerung 16 dazu ausgelegt, in dem Optimierungsprozess gemeinsam mit dem optimierten Auftrags- und Transportplan für die AGVs 12a, 12b, 12c auch Transportwege und Übergabepunkte 10a, 10b, 10c der stationären Fördertechnik 10 zu optimieren und bei außerplanmäßigen Statusmeldungen eines oder mehrerer AGVs 12a, 12b, 12c gegebenenfalls die Transportwege und/oder Übergabepunkte 10a, 10b, 10c der stationären Fördertechnik 10 zu verändern.

Dies ist beispielhaft in Fig. 1 - 3 illustriert. In einem in Fig. 1 dargestellten Beispiel werden gemäß einem regulären Auftrags- und Transportplan an einem ersten Übergabepunkt 10a Lasten von Hochhubwägen aufgenommen, an einem zweiten Übergabepunkt 10b mit Waren von einem autonomen Plattformfahrzeug aufgenommen und an einem dritten Übergabepunkt 10c ein Routenzug zusammengestellt. Die Transportwege der stationären Fördertechnik 10 sind nach dem Auftrags- und Transportplan sind durch gestrichelte Pfeile dargestellt, Fahrwege der AGVs sind durch durchgehende Pfeile schematisch dargestellt.

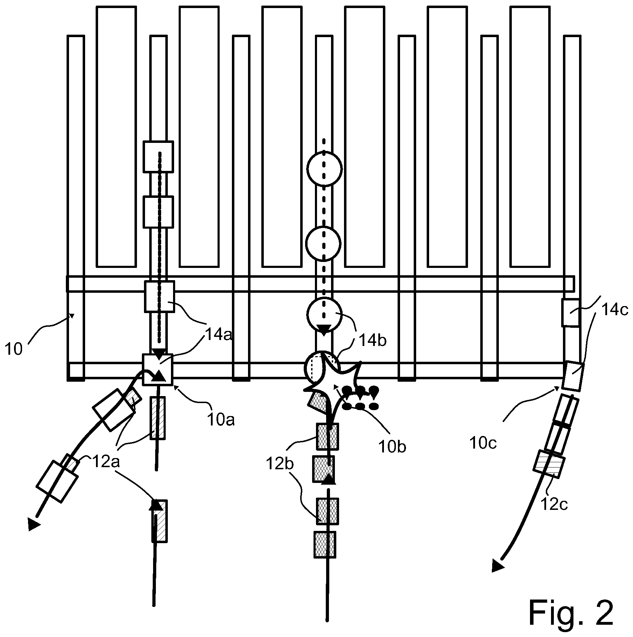

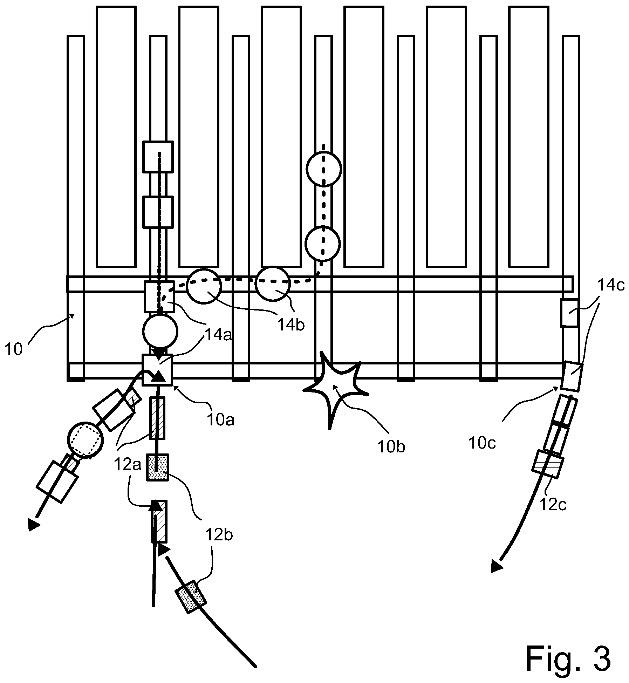

In Fig. 2 kommt es aufgrund einer Störung zu einem Stau am zweiten Übergabepunkt 10b und die Steuerung 16 detektiert außerplanmäßige Statusmeldungen von den dort arbeitenden AGVs. Erfindungsgemäß führt die Steuerung 16 den Optimierungsprozess erneut aus mit der Randbedingung, dass der zweite Übergabepunkt 10b vermieden werden soll, und verändert den optimierten Auftrags- und Transportplan so, dass z.B. wie in Fig. 3 am ersten Übergabepunkt 10a die verschiedenen Typen von AGVs im Wechsel bedient werden, während am zweiten Übergabepunkt 10b z.B. eine Fehlerbehebung durchgeführt werden kann, ohne den Monteur zu gefährden. Dabei werden eventuell mechanische Elemente wie Greifer oder eine Höhenverstellung der stationären Fördertechnik 10 am ersten Übergabepunkt 10a entsprechend verstellt und an den geänderten Typ angepasst und/oder die Reihenfolge, in der Waren mit Hilfe von Regalbediengeräten aus dem Hochregallager entnommen werden wird entsprechend geändert. Ferner steuert die Steuerung 16 neben den Fahrwegen wenigstens einen weiteren Freiheitsgrad wenigstens eines AGV 12a, 12b, 12c, z.B. eine Höhe oder einen Greifer abhängig von der am Übergabepunkt 10a, 10b, 10c vorliegenden Situation.

Die Steuerung 16 umfasst eine selbstlernende KI, die außerplanmäßige Statusmeldungen bei zukünftigen Optimierungsprozessen berücksichtigt. Beispielsweise kann dann, wenn eine Bestimmte Ware häufig zu Problemen am zweiten Übergabepunkt 10b führt, die Steuerung 16 dies berücksichtigen und zukünftig die entsprechende Kombination von Ware und Übergabepunkt vermeiden oder die Steuerung 16 kann erkennen, dass ein Warendurchsatz an einem bestimmten Übergabepunkt nicht den Erwartungen entspricht und die Erwartungen entsprechend anpassen.

Die Steuerung 16 gibt ferner bei angepasstem Auftrags- und Transportplan entsprechend angepasste Befehle für Gebäudetechnik aus und verändert die Befehle für die Gebäudetechnik. Beispielsweise ist es möglich, dass bei geändertem Übergabepunkt 10a, 10b, 10c vom AGV eine andere Tür benutzt werden sollte.

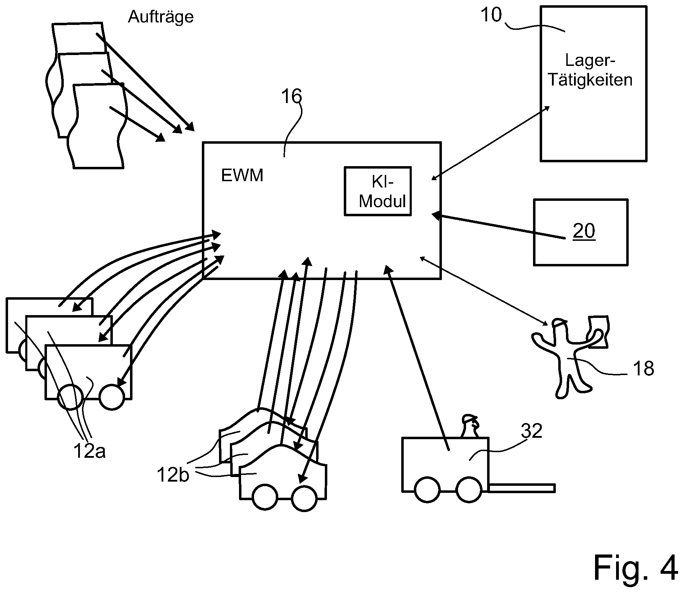

Fig. 4 zeigt ein schematisches Schaubild einer Software- und IT-Infrastruktur eines erfindungsgemäßen Logistikzentrums. Im Zentrum steht ein Extended Warehouse Management (EWM)-System als Steuerung 16. Das EWM-System bietet eine umfassende Verwaltung des gesamten Lagerkomplexes, einschließlich der Bestandsverwaltung, der Planung und Optimierung von Lagerprozessen sowie der Integration von Lager- und Transportmanagement. Das EWM-System ist in der Lage, Daten aus verschiedenen Quellen zu integrieren und zu nutzen, um eine nahtlose und vorausschauende Optimierung der Lagerprozesse zu ermöglichen. Es greift auf umfassende Lagerdaten zu und ist in das gesamte Lagerverwaltungssystem integriert. In dem in Fig. 4 dargestellten Ausführungsbeispiel empfängt das EWM-System 16 von extern Aufträge, Steuert die heterogene Flotte von AGVs 12a, 12b sowie die stationäre Lagertechnik 10 durch geeignete Steuersignale, empfängt Status- und/oder Störungsmeldungen von den AGVs 12a, 12b, sendet Informationen an tragbare Kommunikationsgeräte (z.B. Tablets) von Kommissionierern oder Wartungstechnikern 18, die sich im Logistikzentrum bewegen und empfängt Status- und/oder Störungsmeldungen von diesen. Zusätzlich hat das EWM-System Zugriff auf Planungsdaten 20 zu anhängigen Bestellungen und voraussichtlichen Lieferzeiten von Lieferanten.

Der Hauptfokus liegt auf der strategischen Planung und Optimierung der Lagerprozesse, einschließlich der Bestandsverwaltung, der Ressourcenplanung und der Integration von Lager- und Transportmanagement. Um diese Planung und Optimierung zu verbessern, nutzt das EWM-System ein integriertes Künstliche Intelligenz (KI)-Modul. Das selbstlernende KI-Modul trägt zur Verbesserung der Effizienz und Flexibilität des Logistikzentrums bei, indem sie aus vergangenen Ereignissen lernt und zukünftige Planungen entsprechend anpasst.

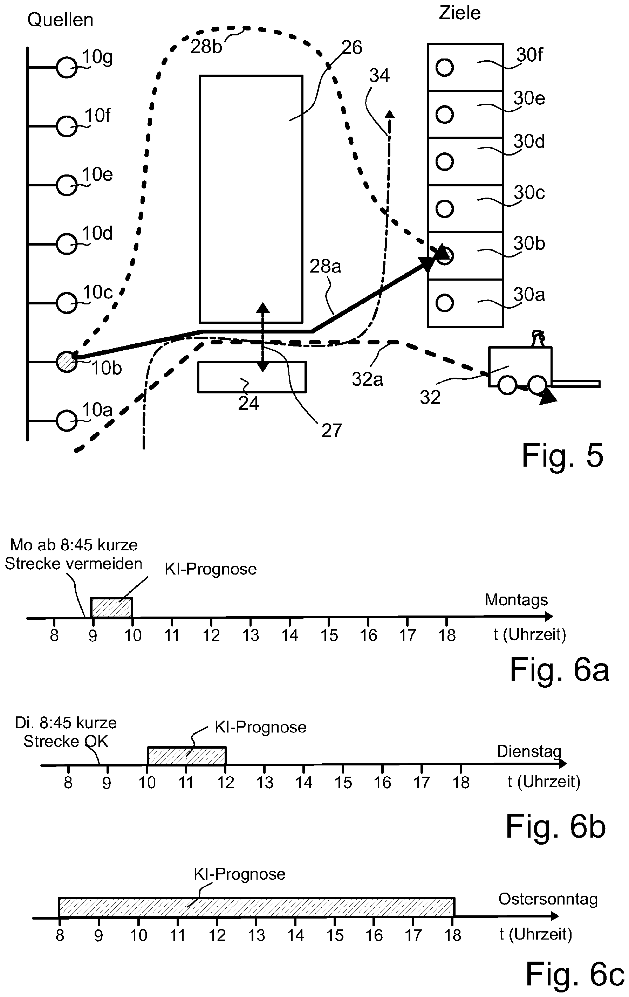

Fig. 5 zeigt ein schematisches Schaubild eines Bereichs des Logistikzentrums mit z.B. nur zeitweise besetzten, manuellen (d.h.) von Menschen besetzten Kommissionierplätzen 24, die an ein Bodenlager 26 mit Paletten und manueller Kommissionierung angrenzen. Im Beispiel wird davon ausgegangen, dass diese Kommissionierplätze 24 nur phasenweise besetzt sind, z.B. wenn ein große Lieferung bestimmter Waren eingeht oder spezielle, nur gelegentlich anfallende Kommissionieraufgaben erfüllt werden müssen.

Der mit einer durchgehenden Linie dargestellte kürzeste Weg 28a zwischen einer bestimmten Quelle 10b und einem bestimmten Ziel 30b überkreuzt Laufwege 27 der manuellen Kommissionierplätze 24. In den Phasen, in denen die manuellen Kommissionierplätze 24 besetzt sind, müssen die AGVs 12a, 12b daher an dieser Stelle häufig stoppen, um Kollisionen mit den Kommissionierern zu vermeiden, während außerhalb dieser Phasen generell freie Fahrt herrscht.

Ferner sei angenommen, dass der gestrichelt dargestellte Fahrweg 32a eines personenbedienten Staplers 32 gelegentlich oder regelmäßig den Bereich der manuellen Kommissionierplätze 24 durchkreuzt, so dass es auch hier zu Konflikten kommen kann. Zudem können auch in einer gestrichpunkteten Linie Fahrwege 34 anderer AGVs, insbesondere von AGVs anderer Hersteller, den kürzesten Fahrweg 28a kreuzen.

Die KI kann kontinuierlich aus den Daten lernen und die Optimierungsstrategien anpassen, um die Effizienz zu maximieren und die oben genannten Vorgänge zu prognostizieren.

Fig. 6a - 6c zeigen eine KI-generierte Auslastungsprognose eines exemplarischen Bereichs des Logistikzentrums für verschiedene Wochentage oder Feiertage. Im dargestellten Beispiel sind z.B. die manuellen Kommissionierplätze häufig montags zwischen 9 und 10 Uhr besetzt (Fig. 6a), Dienstags zwischen 10 und 12 (Fig. 6b) und ganztägig jedes Jahr am Ostermontag (Fig. 6c). Diese Muster müssen nicht in die Steuerung eingegeben werden, sondern sie werden vom KI-Modul 22 selbstlernend als Muster erkannt. Die von der KI erkannten Muster sind nicht auf sich wöchentlich, täglich oder jährlich wiederkehrende Ereignisse beschränkt, sondern können auch anlassbezogen sein, z.B. wenn eine große Lieferung eines bestimmten Lieferanten eintrifft oder wenn die Wetterbedingungen das Kommissionieren großer Mengen bestimmter Produkte erforderlich bzw. wahrscheinlich machen. Ferner kann die Auslastung der menschlichen Kommissionierplätze vom Dienstplan, Feiertagen oder Schulferien abhängen oder die KI kann lernen, wann der Fahrer des personenbedienten Staplers 32 regelmäßig zum Pausenraum fährt.

Im dargestellten Beispiel ist es in der Phasen mit stark besetzten menschlichen Kommissionierplätzen 24 effektiver, wenn die AGVs den in Fig. 5 gepunktet dargestellten, längeren Weg 28b um das Palettenlager 26 herum nehmen und die Steuerung 16 steuert die AGVs 12a, 12b entsprechend.

Das oben beschriebene Beispiel mit den nur phasenweise besetzten Kommissionierplätzen 24 ist stellvertretend für verschiedene in einem Logistikzentrum vorkommende Stausituationen für manuellen und automatischen Transporte sowie verschiedener Lagertätigkeiten zu verstehen. Das KI-Modul 22 lernt kontiuierlich, welche Stausituationen mit welchen sonstigen Vorgängen im Lager korrelieren und kann damit vorausschauend Alternativstrecken vorschlage um diese zu vermeiden und damit die Transportleistung der AGVs signifikant erhöhen.

Das selbstlernende KI-Modul 22 ermittelt Korrelationen zwischen jeglichen Logistikabläufen im Logistikzentrum (z.b. andere gleichzeitige Transporte oder Lagerprozesse) mit Stausitiatioen und nutzt diese gelernten Korrelationen in zukünftigen Optimierungsprozessen bei der Erstellung zukünftiger Auftrags- und Transportpläne, die Auftrags- und Transportpläne jeglicher AGV-Transporte und zugehöriger Stetigfördertransporte umfassen.

## Patentansprüche

1. Logistikzentrum mit stationärer Fördertechnik (10) mit mehreren Übergabepunkten (10a, 10b, 10c) und einer Flotte von autonomen Transportfahrzeugen (AGVs) (12a, 12b, 12c) zum Transportieren von Waren von oder zu den Übergabepunkten (10a, 10b, 10c) der Fördertechnik (10) und einer Steuerung (16) zum Steuern der Fördertechnik (10) und der autonomen Transportfahrzeugen, wobei die Steuerung (16) dazu ausgelegt ist in einem Optimierungsprozess einen optimierten Auftrags- und Transportplan zu erstellen, gemäß dem optimierten Auftrags- und Transportplan Aufträge an die AGVs (12a, 12b, 12c) zu vergeben und Instruktionen für Fahrwege an die AGVs (12a, 12b, 12c) zu senden, Statusmeldungen der AGVs zu empfangen und zu verarbeiten und bei außerplanmäßigen Statusmeldungen eines oder mehrerer AGVs (12a, 12b, 12c) den Optimierungsprozess auszuführen und den optimierten Auftrags- und Transportplan zu verändern oder neu zu erstellen,
**dadurch gekennzeichnet, dass** die Steuerung (16) in ein Extended Warehouse Management (EWM)-System integriert ist und auf Daten aus dem Extended Warehouse Management (EWM)-System zugreift und eine selbstlernende KI umfasst, die au-βerplanmäßige Statusmeldungen bei zukünftigen Optimierungsprozessen berücksichtigt.

2. Logistikzentrum nach Anspruch 1,
**dadurch gekennzeichnet, dass**
die Flotte von autonomen Transportfahrzeugen (12a, 12b, 12c) verschiedene Typen von autonomen Transportfahrzeugen (12a, 12b, 12c) umfasst.

3. Logistikzentrum nach einem der vorhergehenden Ansprüche,
**dadurch gekennzeichnet, dass**
die Steuerung (16) dazu ausgelegt ist, in dem Optimierungsprozess gemeinsam mit dem optimierten Auftrags- und Transportplan für die AGVs (12a, 12b, 12c) auch Transportwege und Übergabepunkte (10a, 10b, 10c) der stationären Fördertechnik (10) zu optimieren und bei außerplanmäßigen Statusmeldungen eines oder mehrerer AGVs (12a, 12b, 12c) gegebenenfalls die Transportwege und/oder Übergabepunkte (10a, 10b, 10c) der stationären Fördertechnik (10) zu verändern.

4. Logistikzentrum nach einem der vorhergehenden Ansprüche,
**dadurch gekennzeichnet, dass**
die Steuerung (16) dazu ausgelegt ist, Befehle für Gebäudetechnik auszugeben und bei außerplanmäßigen Statusmeldungen eines oder mehrerer AGVs (12a, 12b, 12c) einen oder mehrere Befehle für die Gebäudetechnik zu verändern.

5. Logistikzentrum nach einem der vorhergehenden Ansprüche,
**dadurch gekennzeichnet, dass**
die Steuerung (16) dazu ausgelegt ist, Statusmeldungen der Gebäudetechnik zu empfangen und bei außerplanmäßigen Statusmeldungen der Gebäudetechnik den Optimierungsprozess erneut auszuführen und den optimierten Auftrags- und Transportplan unter Berücksichtigung der Statusmeldungen der Gebäudetechnik zu verändern oder neu zu erstellen.

6. Logistikzentrum nach einem der vorhergehenden Ansprüche,
**dadurch gekennzeichnet, dass**
die Steuerung (16) neben den Fahrwegen wenigstens einen weiteren Freiheitsgrad wenigstens eines AGVs (12a, 12b, 12c) steuert.

7. Verfahren zum Steuern eines Logistikzentrums mit stationärer Fördertechnik (10) mit mehreren Übergabepunkten (10a, 10b, 10c) und einer Flotte von autonomen Transportfahrzeugen (AGVs) zum Transportieren von Waren von oder zu den Übergabepunkten (10a, 10b, 10c) der Fördertechnik (10) und einer Steuerung (16) zum Steuern der Fördertechnik (10) und der autonomen Transportfahrzeugen, wobei das Verfahren das Ausführen eines Optimierungsprozesses zur Erstellung eines optimierten Auftrags- und Transportplans, das Vergeben von Aufträgen an die AGVs gemäß dem optimierten Auftrags- und Transportplan, das Senden von und Instruktionen für Fahrwege an die AGVs, das Empfangen und Verarbeiten von Statusmeldungen der AGVs zu empfangen und das erneute Ausführen des Optimierungsprozesses bei außerplanmäßigen Statusmeldungen eines oder mehrerer AGVs zum Verändern oder neu Erstellen des optimierten Auftrags- und Transportplan umfasst,
**dadurch gekennzeichnet, dass** beim Ausführen des Optimierungsprozesses und auf Daten aus einem Extended Warehouse Management (EWM)-System zugegriffen wird und eine selbstlernende KI genutzt wird, die außerplanmäßige Statusmeldungen bei zukünftigen Optimierungsprozessen berücksichtigt.

8. Verfahren nach Anspruch 7,
**dadurch gekennzeichnet, dass**
beim Ausführen des Optimierungsprozesses gemeinsam mit dem optimierten Auftrags- und Transportplan für die AGVs auch Transportwege und Übergabepunkte (10a, 10b, 10c) der stationären Fördertechnik (10) optimiert werden und bei außerplanmäßigen Statusmeldungen eines oder mehrerer AGVs gegebenenfalls die Transportwege und/oder Übergabepunkte (10a, 10b, 10c) der stationären Fördertechnik (10) verändert werden.
